Europäisches Patentamt

European Patent Office

Office européen des brevets

(19)

(11) **EP 0 516 232 B1**

(12)

# FASCICULE DE BREVET EUROPEEN

(45) Date de publication et mention
de la délivrance du brevet:
**04.02.1998 Bulletin 1998/06**

(51) Int Cl.⁶: **H04L 5/24**, H04L 25/36,
G06F 5/06

(21) Numéro de dépôt: **92201470.9**

(22) Date de dépôt: **22.05.1992**

(54) **Dispositif permettant le transfert de données à débit variable entre un modem et un terminal synchrone**

Einrichtung zur Übertragung von Daten mit variabler Bitrate zwischen einem Modem und einer synchronen Endeinrichtung

Apparatus allowing the transmission of data with a variable bit rate between a modem and a synchronous terminal

(84) Etats contractants désignés:
**CH DE FR GB IT LI SE**

(30) Priorité: **31.05.1991 FR 9106588**

(43) Date de publication de la demande:
**02.12.1992 Bulletin 1992/49**

(73) Titulaires:
• **PHILIPS COMMUNICATION D'ENTREPRISE**
**75013 Paris (FR)**
Etats contractants désignés:
**FR**
• **Philips Electronics N.V.**
**5621 BA Eindhoven (NL)**
Etats contractants désignés:
**CH DE GB IT LI SE**

(72) Inventeurs:
• **Mery, Lionel**
**F-75008 Paris (FR)**
• **Guyon, Jean-Paul**
**F-75008 Paris (FR)**
• **Catorc, Jacqueline**
**F-75008 Paris (FR)**

(74) Mandataire: **Chameroy, Claude et al**
**c/o Cabinet Malémont**
**42, avenue du Président Wilson**
**75116 Paris (FR)**

(56) Documents cités:
EP-A- 0 031 031          DE-A- 2 639 895
US-A- 4 288 860          US-A- 4 905 258

# Description

La présente invention concerne un dispositif permettant le transfert de données à débit variable entre un modem et un terminal synchrone, dispositif comportant d'une part une pluralité d'accès connectés au terminal dont : un premier accès pour recevoir des données du terminal, un deuxième accès pour fournir des signaux d'horloge au terminal afin de fixer le rythme des données reçues, un troisième accès pour fournir des données au terminal et un quatrième accès pour fournir des signaux d'horloge au terminal afin de fixer le rythme des données fournies et d'autre part des accès connectés à la ligne de transmission pour transmettre les données à un débit uniforme, dispositif comportant en outre un circuit d'horloge à fréquence variable pour pouvoir fournir des signaux d'horloge à fréquence variable audit deuxième accès en fonction du débit désiré.

Un problème courant en transmission de données est d'adapter le débit des terminaux avec le débit qu'offre une ligne de transmission. On pourra à ce sujet consulter le document japonais KOKAI 63-120537.

Une solution évidente à ce genre de problème est d'utiliser le mode asynchrone selon lequel le terminal n'est autorisé à émettre que si le dispositif lui en donne l'autorisation. Ce mode est bien adapté aussi au modem effectuant des procédures de compression de données, notamment celles satisfaisant à la recommandation V42bis du CCITT. En effet, le taux de compression est variable en fonction de la nature des données que fournit le terminal. Ainsi pour une ligne de transmission dont le débit est limité à 9600 éléments binaires par seconde on peut transmettre des données fournies par le terminal à la cadence de 19200 eb/s si le taux de compression est supérieur à deux. Mais si le taux de compression devient inférieur à deux, il faut alors réduire la vitesse du terminal. Dans le mode asynchrone on agit :

- soit sur le flux des données fournies au modem où l'on intercale des caractères de contrôle $X_{ON}$ (autorisation d'émettre) et $X_{OFF}$ (interdiction d'émettre),
- soit sur le circuit de jonction [106] (ce circuit est défini dans les recommandations du CCITT) pour que son signal passe à l'état fermé afin que le terminal ait l'autorisation d'émettre et passe à l'état ouvert afin que le terminal reçoive une interdiction d'émettre.

Toutes ces mesures précitées ne peuvent plus être applicables lorsqu'on a affaire à un terminal de type synchrone. Les caractères $X_{ON}$ et $X_{OFF}$ ne sont pas interprétés car le terminal n'émet et ne reçoit que des trames.

Le circuit de jonction [106] a une signification différente. Une chute de ce signal entraîne en général la déconnexion du terminal.

Pour résoudre le problème précité, il est connu de faire varier la fréquence du terminal, comme cela est décrit dans le document de brevet EP 0 031 031. Cependant, ces changements de rythme ne peuvent pas se faire sans précautions.

La présente invention propose un dispositif qui permet de connecter un terminal de type synchrone devant fournir les données à débit variable pour pouvoir notamment subir les procédures de compression de données.

Pour cela, un tel dispositif est remarquable en ce que le circuit d'horloge comporte un circuit de sélection de rythme et un registre de validation du débit désiré pour commander le circuit de sélection à un moment où les différents rythmes présentent une valeur bien déterminée.

Ainsi, grâce aux mesures préconisées par l'invention, on évite tout phénomène transitoire intempestif.

La description suivante accompagnée des dessins ci-annexés, le tout donné à titre d'exemple non limitatif, fera bien comprendre comment l'invention peut être réalisée.

La figure 1 montre un dispositif conforme à l'invention.

La figure 2 montre un circuit d'horloge à fréquence variable faisant partie du dispositif conforme à l'invention.

La figure 3 est un diagramme temps nécessaire à l'explication du circuit de la figure 2.

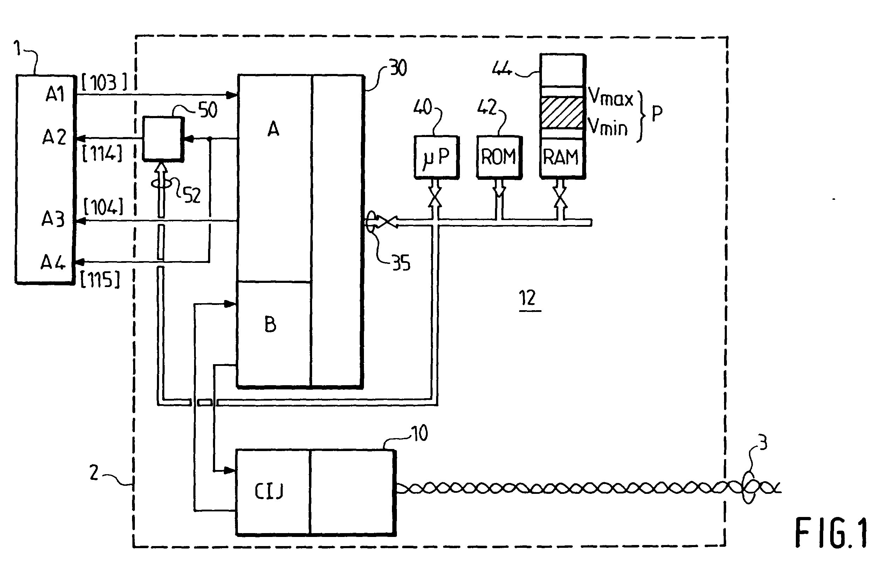

A la figure 1, la référence 1 indique un terminal de type synchrone et la référence 2 un dispositif conforme à l'invention qui assure un débit d'information fixe pour une ligne téléphonique 3. Le terminal 1 est relié au dispositif par les circuits de jonction [103], [114], [104] et [115] définis par les recommandations du CCITT et que l'on rappelle ci-dessous :

[103] :  circuit pour le transfert des données du terminal 1 au dispositif 2,

[114] :  circuit pour des signaux d'horloge fixant le rythme des données du circuit [103],

[104] :  circuit pour le transfert des données du dispositif 2 vers le terminal 1, et

[115] :  circuit pour des signaux d'horloge définissant le rythme des données fournies par le circuit [104].

Ces différents circuits de fonction sont reliés respectivement aux accès A1, A2, A3 et A4 du circuit terminal.

Le dispositif 2 est formé d'une partie purement MODEM 10 et d'une partie de traitement 12 pour la mise en oeuvre de la procédure de compression de données telle que, par exemple, celle décrite dans l'avis V42bis des recommandations du CCITT.

La partie 10 est un circuit de modem du type décrit dans l'article "UNE NOUVELLE GENERATION DE MODEMS A BASE DE CIRCUITS INTEGRES A GRANDE ECHELLE" de J.C.INVERNICI, O.LE RICHE et al., paru dans la revue Commutation et transmission n°3 de 1986.

La partie 12 se compose d'un double contrôleur de communication série 30 du type Z85C30 fabriqué par Zilog. Une partie A comporte des accès série pour la liaison avec le terminal 1 et une partie B pour la liaison avec le circuit modem 10.

Les accès parallèles 35 du circuit 30 sont reliés à un ensemble de traitement comportant notamment un microprocesseur 40, une mémoire morte 42 contenant les instructions de fonctionnement dudit ensemble et une mémoire vive 44.

Selon l'invention, on a prévu un circuit d'horloge à fréquence variable 50 pouvant fournir des signaux d'horloge à fréquence variable à l'accès du terminal se comportant comme le circuit de jonction [114].

Les différentes données à émettre provenant du terminal sont mises tout d'abord dans une pile P ménagée dans la mémoire 44. L'état de cette pile, susceptible de varier entre une valeur minimum $V_{min}$ et une valeur maximale $V_{MAX}$, analysé par programme, détermine la fréquence à appliquer sur le circuit de jonction [114]. L'information de détermination transite par une ligne 52. Si on s'aperçoit que la pile diminue et tend vers la valeur $V_{min}$, un signal de fréquence plus élevée sera appliqué à [114] si, au contraire, le signal tend vers la valeur $V_{MAX}$ on diminuera le rythme. On notera que les terminaux de la série COMPAC fabriqués par la société T.R.T. répondent bien aux sollicitations du circuit de jonction [114].

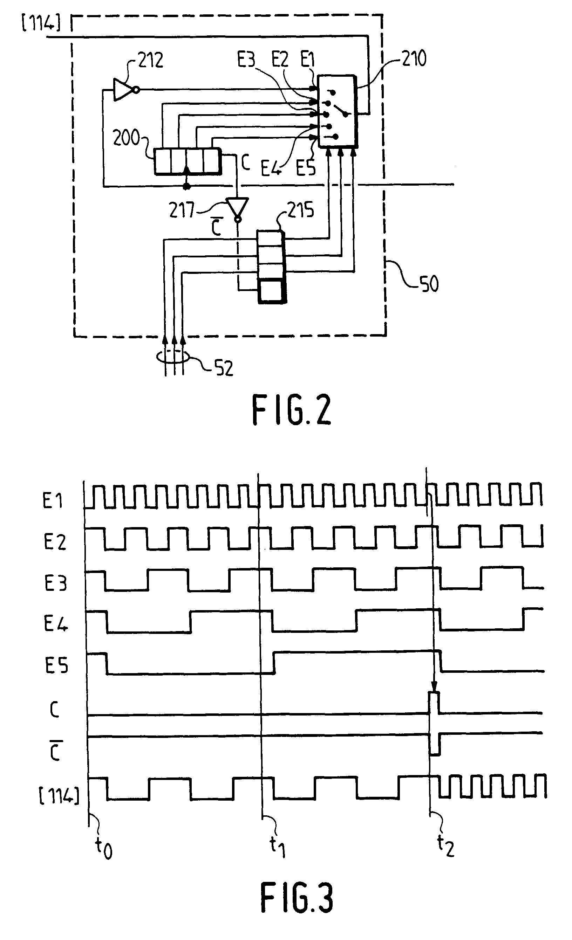

La figure 2 montre en détail le circuit d'horloge 50, les signaux d'horloge provenant de la sortie de signaux d'horloge du contrôleur série 30. Ces signaux sont appliqués à l'entrée de comptage d'un compteur 200 dont les différentes sorties représentent la division par 2, 4, 8, 16 sont reliées aux entrées E2, E3, E4 et E5 d'un multiplexeur 210 dont une autre entrée E1 reçoit le signal complémentaire du signal d'horloge. Ce complément est dû à un inverseur 212. Le compteur 210 est muni d'une sortie C pour transmettre une retenue à un circuit de verrouillage 215, via un inverseur 217, pour valider à l'apparition de la retenue les valeurs transmises par le fil 52.

Le fonctionnement d'un tel circuit est expliqué ci-dessous à l'aide du diagramme temps représenté à la figure 3. Les signaux référencés E1 à E5 correspondent à ceux appliqués aux entrées ayant les mêmes références. Le signal C est le signal de retenue et $\overline{C}$ son signal complémentaire. Le signal formé à la sortie porte la référence [114] rappelant le circuit de jonction de même référence.

On se place à l'instant $t_0$ où le signal de sortie est tel que :

[114] = E3 puis, à l'instant $t_1$ le signal de commande véhiculé par la ligne 52 impose une cadence plus rapide des signaux à appliquer à l'accès [114]. Pour changer de rythme, on attend l'apparition du signal de retenue qui apparaît à l'instant $t_2$. A cet instant tous les signaux de sortie du compteur 200 ont une valeur bien définie "1" par exemple de sorte qu'à partir de cet instant, le rythme à la jonction [114] peut changer sans qu'il y ait de phénomène transitoire intempestif.

## Revendications

1. Dispositif permettant le transfert de données à débit variable entre un modem (10) et un terminal synchrone (1), dispositif comportant d'une part une pluralité d'accès connectés au terminal dont : un premier accès (103) pour recevoir des données du terminal, un deuxième accès (114) pour fournir des signaux d'horloge au terminal afin de fixer le rythme des données reçues, un troisième accès (104) pour fournir des données au terminal et un quatrième accès (115) pour fournir des signaux d'horloge au terminal afin de fixer le rythme des données fournies et d'autre part des accès connectés à la ligne de transmission pour transmettre les données à un débit uniforme, dispositif comportant en outre un circuit d'horloge (50) à fréquence variable pour pouvoir fournir des signaux d'horloge à fréquence variable audit deuxième accès en fonction du débit désiré, caractérisé en ce que le circuit d'horloge comporte un circuit de sélection de rythme (210) et un registre (215) de validation du débit désiré pour commander le circuit de sélection à un moment où les différents rythmes présentent une valeur bien déterminée.

## Patentansprüche

1. Einrichtung zur Datenübertragung mit variabler Bitrate zwischen einem Modem (10) und einer synchronen Datenendeinrichtung (1), mit einerseits einer Mehrzahl an die Datenendeinrichtung angeschlossener Zugriffe, und zwar einem ersten Zugriff (103) zur Aufnahme von Daten aus der Endeinrichtung, einem zweiten Zugriff (114), um der Endeinrichtung Taktsignale zu liefern, zum Festlegen des Taktes der aufgenommenen Daten, einem dritten Zugriff (104), um der Endeinrichtung Daten zu liefern, und einem vierten Zugriff (115), um der Endeinrichtung Taktsignale zu liefern, zum Festlegen des Taktes der gelieferten Daten, und andererseits mit an die Übertragungsleitung angeschlossenen Zugriffen zur Datenübertragung mit gleichmäßiger Bitrate, sowie mit einem Taktgeber (50) mit variabler Frequenz, um dem zweiten Zugriff in Abhängigkeit von der gewünschten Bitrate Taktsignale mit variabler Frequenz liefern zu können, dadurch gekennzeichnet, daß der Taktgeber eine Taktwahlleitung (210) aufweist sowie ein Register (215) zur Validierung der gewünschten Bitrate, um die Wahlleitung zu einem Zeitpunkt zu betätigen, in dem die verschiedenen Takte einen ganz bestimmten Wert aufweisen.

## Claims

1. A device for variable bit-rate data transfer between a modem (10) and a synchronous terminal (1), the device comprising, on one hand, a plurality of terminal-connected access means : a first access means (103) for receiving data from the terminal, a second access means (114) for supplying clock signals to the terminal for fixing the rate of the received data, a third access means (104) for supplying data to the terminal, and a fourth access means (115) for supplying clock signals to the terminal for fixing the rate of the received data and, on the other hand, access means connected to the transmission line for transmitting the data at a uniform bit-rate, the device further comprising a variable rate clock circuit (50) for supplying variable-rate clock signals to said second access means as a function of the desired bit-rate, characterized in that the clock circuit comprises a rate selection circuit (210) and a validation register (215) of the desired bit-rate for controlling the selection circuit at a moment when the different rates exhibit a well defined value.

**FIG.1**

A1 [103]
A2 [114]
A3 [104]
A4 [115]

1

50
52

A

B

CIJ

30

35

40 µP

42 ROM

44 RAM

Vmax
Vmin  } P

12

10

2

3

FIG.2

FIG.3